# EUROPÄISCHE PATENTSCHRIFT

(11) **EP 1 612 441 B1**
(45) Veröffentlichungstag und Bekanntmachung des Hinweises auf die Patenterteilung: **24.12.2008**
(21) Anmeldenummer: 04015182.1
(22) Anmeldetag: 29.06.2004
(51) Int. Cl.: F16D 21/06, F16D 25/10

(54) **Kupplungseinrichtung**
Device for coupling
Dispositif d'accouplement

(43) Veröffentlichungstag der Anmeldung: 04.01.2006
(73) Patentinhaber: BorgWarner, Inc., Auburn Hills, MI 48326-2872 (US)
(72) Erfinder: Günter, Frank, Dr., 76228 Karlsruhe (DE)
(74) Vertreter: Patentanwälte Westphal, Mussgnug & Partner

(56) Entgegenhaltungen:
- DE-A- 10 133 638
- US-A1- 2002 065 171
- US-A1- 2004 035 666
- US-B1- 6 464 059

## Beschreibung

Die Erfindung betrifft eine Kupplungseinrichtung, insbesondere Doppelkupplungseinrichtung, gemäß dem Oberbegriff des Patentanspruchs 1.

Aus dem Stand der Technik sind Kupplungseinrichtungen bekannt, bei dem eine oder mehrere Kupplungen um eine Drehdurchführung drehbar gelagert sind. So zeigt beispielsweise die EP 1 195 537 A1 eine Doppelkupplung mit Hilfe der zwei Getriebeeingangswellen unabhängig voneinander von derselben Antriebswelle angetrieben werden können, indem jeweils eine der beiden Kupplungen der Doppelkupplung eine der beiden Getriebeeingangswellen mit der Antriebswelle schaltbar verbindet.

Dort sind die zwei Einzelkupplungen an einer Kupplungsnabe angebracht, welche die in dieser Druckschrift als Kupplungsachse bezeichnete Drehdurchführung drehbar umgreift. Die Drehdurchführung weist mehrere in axialer Richtung verlaufende Hydraulikflüssigkeitskanäle auf. Diese axial verlaufenden Hydraulikflüssigkeitskanäle münden in in Umfangsrichtung umlaufende Nuten, welche in diesem Dokument als Ölkanäle bezeichnet sind. Nachfolgend werden diese als Hydraulikflüssigkeitsaustrittsöffnungen bezeichnet. Zwei dieser Austrittsöffnungen sind über (Öl-) Bohrungen mit jeweiligen dort als Arbeitskammern bezeichneten Druckräumen der entsprechenden Kupplungen verbunden. Jede der Hydraulikflüssigkeitsaustrittsöffnungen ist im Übergabebereich zwischen Drehdurchführung und Kupplungsnabe mittels ringförmiger, in entsprechenden umlaufenden Nuten der Drehdurchführung angeordneten Drehdurchführungsdichtungen gegenüber ihrer Umgebung, insbesondere gegenüber benachbarten Hydraulikflüssigkeitsaustrittsöffnungen abgedichtet.

Die beiden Betätigungskolben sind jeweils in sogenannten Ringkolben axial verschieblich geführt. Die beiden Betätigungskolben schließen mit ihren zugehörigen Ringkolben jeweils einen der vorerwähnten Druckräume ein. Um eine Betätigung der jeweiligen Kupplung mittels einem der Betätigungskolben über eine Druckbeaufschlagung des entsprechenden Druckraums zu ermöglichen, sind diese Betätigungskolben an deren an die entsprechenden Ringkolben angrenzenden Flächen mittels ringförmiger Lippendichtungen, welche nachfolgend als Betätigungskolbendichtungen bezeichnet sind (in der EP 1 195 537 A1 werden diese Lippendichtungen Ringdichtungen genannt), gegenüber der Umgebung abgedichtet.

Obwohl sich eine derartige Ausführung dem Grunde nach bewährt hat, besteht weiterer Verbesserungsbedarf.

Die Aufgabe der Erfindung liegt nunmehr darin, bei einer Kupplungseinrichtung, insbesondere Doppelkupplungseinrichtung, gattungsgemäßer Art den Bauraum in radialer Richtung sowie die Anzahl der Dichtungen zu reduzieren.

Diese Aufgabe wird durch eine Kupplungseinrichtung mit den Merkmalen des Oberbegriffs des Patentanspruchs 1 durch die Merkmale dessen kennzeichnenden Teils gelöst.

Vorteilhafte Ausführungen und Weiterbildungen der Erfindung sind in den Unteransprüchen angegeben.

Die Erfindung beruht auf der Idee, die bei Kupplungseinrichtungen gemäß dem Stand der Technik vorhandene Trennung der Funktionen "Drehdurchführungsdichtung" und "Abdichtung des Betätigungskolbens" aufzuheben und diese Funktionen zu kombinieren.

Demnach ist erfindungsgemäß vorgesehen, dass der Betätigungskolben auf der Drehdurchführung axial verschieblich geführt ist und dass die wenigstens eine Drehdurchführungsdichtung zusätzlich wenigstens eine der Betätigungskolbendichtungen darstellt. Diese Drehdurchführungsdichtung wird demzufolge neben der Abdichtung der Übergabestelle Drehdurchführung/Kupplung auch für die Abdichtung des axialen Verschiebewegs des Betätigungskolbens benutzt.

Auf diese Weise kann wenigstens eine der Spalt- oder Lippendichtungen entfallen. Dadurch wird die Kupplungseinrichtung robuster.

Die Reduzierung der notwendigen Bauteile hat zur Folge, dass sowohl die Fertigungskosten als auch die Montagekosten gesenkt werden.

Weiterhin tritt eine reduzierte Hysterese auf. Die Reduzierung der Hysterese wird dadurch erreicht, dass die Dichtungen unter ständiger Bewegung sind.

Schließlich wird der radial erforderliche Bauraum reduziert, was zum einen zu einer möglichen kompakteren Bauweise führt und zum anderen auch zu einer Vereinfachung des Fliehkraftausgleichs, da die rotierende nicht aktive Hydraulikflüssigkeitssäule verkürzt wird.

In einer besonders vorteilhaften Ausführungsvariante der Erfindung ist vorgesehen, dass genau eine eine Betätigungskolbendichtung darstellende Drehdurchführungsdichtung je Kupplung bzw. je Druckraum vorgesehen ist, welche die Drehdurchführung ringförmig umgreift. Diese Variante kommt mit wenigen Einzelteilen aus.

Die Kupplungseinrichtung kann in unterschiedlichster Art und Weise ausgebildet sein.

Bei einem ersten Ausführungsbeispiel ist ein Ringzylinder vorgesehen, an dem der Betätigungskolben der Kupplung außenumfangsseitig axial verschieblich geführt ist. Zwischen dem Betätigungskolben und dem Ringzylinder ist eine ringförmige Betätigungskolbendichtung vorgesehen, welche den durch den Ringzylinder, den Betätigungskolben und die Drehdurchführung gebildeten Druckraum gegen seine Umgebung abdichtet. Bei diesem Ausführungsbeispiel sind wenigstens eine ringförmige Drehdurchführungsdichtung, eine kombinierte ringförmige Drehdurchführungs- und Betätigungskolbendichtung sowie eine ringförmige Betätigungskolbendichtung erforderlich.

Bei einem zweiten Ausführungsbeispiel ist am Außenumfang des Betätigungskolbens ein Balg angeordnet. Dieser dichtet den Druckraum gegenüber seiner Umgebung ab. Bei diesem Ausführungsbeispiel sind wenigstens eine ringförmige Drehdurchführungsdichtung und eine kombinierte ringförmige Drehdurchführungs- und Betätigungskolbendichtung erforderlich. Die Zahl der benötigten Einzelteile ist gegenüber dem vorstehend beschriebenen Ausführungsbeispiel weiter reduziert.

Diese Ausführung lässt sich weiter verbessern, wenn man den Balg als Rückstellfeder ausbildet. Damit lässt sich die Zahl der notwendigen Einzelteile weiter reduzieren.

Die Erfindung wird nunmehr anhand der Zeichnung näher beschrieben. Es zeigen:
- Figur 1: ein erstes Ausführungsbeispiel einer Kupplungseinrichtung gemäß der Erfindung
- Figur 2: ein zweites Ausführungsbeispiel einer Kupplungseinrichtung gemäß der Erfindung

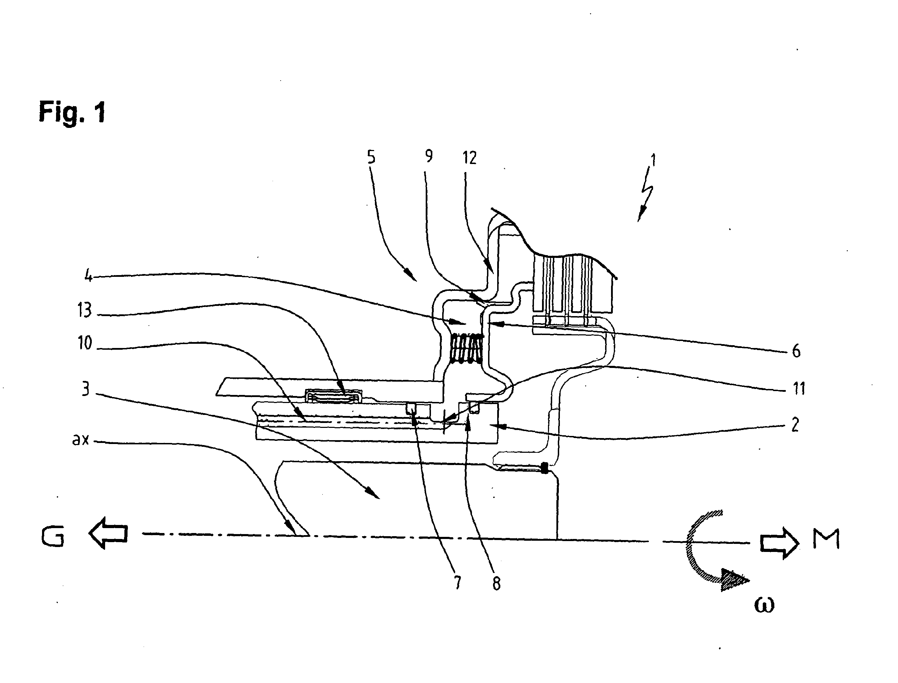

Die Figur 1 zeigt eine erste erfindungsgemäß ausgebildete Kupplungseinrichtung. Dargestellt sind lediglich die zur Betätigung einer einzigen Kupplung notwendigen Bestandteile. Kupplungsscheiben, Reiblamellen oder sonstige aneinander reibende Elemente sind nicht dargestellt, ebenso wenig wie die zur Kupplung führende Antriebswelle und die von der Kupplung wegführende Abtriebswelle.

Es versteht sich für den Fachmann von selbst, dass der gezeigte Ausschnitt Bestandteil einer einfachen Kupplung oder einer Mehrfachkupplung sein kann. Insbesondere kann der gezeigte Ausschnitt Bestandteil einer Doppelkupplung sein, bei der eine Kupplung die andere radial übergreift oder Bestandteil einer Doppelkupplung, wie sie beispielsweise in der EP 1 195 537 A1 dargestellt ist, bei der zwei Kupplungen axial nebeneinander angeordnet sind. In diesem letztgenannten Fall kann der in Figur 1 dargestellte Ausschnitt in im Wesentlichen spiegelsymmetrischer Ausführung doppelt vorgesehen sein, nämlich zur Ansteuerung der ersten, links angeordneten Kupplung und zur Ansteuerung der zweiten, rechts von dieser ersten Kupplung angeordneten Kupplung. Im Gegensatz zu dem in der EP 1 195 537 A1 beschriebenen Ausführungsbeispielmüssen die Kupplungen jedoch nicht zwingend identisch ausgeführt sein. Insbesondere sind Unterschiede sowohl in den axialen als auch in den radialen Abmessungen zulässig.

Wesentliche Bestandteile der Kupplungseinrichtung sind, wie in der Figur 1 gezeigt ist eine Drehdurchführung 2, um welche die Kupplung 5 drehbar (angedeutet durch die Drehrichtung gelagert ist. Exemplarisch wird die Lagerung durch ein Radiallager 13 symbolisiert.

Weiterhin ist ein Betätigungskolben 6 vorgesehen, über den die Kupplung 5 hydraulisch betätigbar ist, zum Beispiel, in dem dieser gegen ein Lamellenpaket gedrückt wird und auf diese Weise die Lamellen des Patents in Reibschluss verbringt.

Die axial (ax) verschiebbare Führung des Betätigungskolbens 6 wird im vorliegenden Ausführungsbeispiel gemäß der Figur 1 außenumfangsseitig durch einen Ringkolben 12 sowie innenumfangsseitig durch die Drehdurchführung 2 gebildet.

Ringkolben 12, Betätigungskolben 6 sowie Drehdurchführung 2 schließen einen sogenannten Druckraum 4 ein, welcher über einen Hydraulikflüssigkeitskanal 10 in der Drehdurchführung 2 mit Hydraulikflüssigkeit befüllbar und druckbeaufschlagbar ist.

Um eine Druckbeaufschlagung mit Hydraulikflüssigkeit zu ermöglichen, ist es erforderlich, sämtliche gegeneinander beweglichen Bauteile gegenüber der Umgebung abzudichten. Insbesondere ist eine Abdichtung zwischen Betätigungskolben 6 und Ringkolben 12 erforderlich. Zu diesem Zweck ist in an sich üblicher Weise eine Ringdichtung 9, vorzugsweise eine Lippendichtung, als Betätigungskolbendichtung vorgesehen. Weiterhin muss verhindert werden, dass Hydraulikflüssigkeit, welche aus einer über den Hydraulikflüssigkeitskanal 10 zugeleitete und über eine Hydraulikflüssigkeitsaustrittsöffnung 11 in den Druckraum 4 geleitete Hydraulikflüssigkeit in den Zwischenbereich zwischen Kupplung 5 und Drehdurchführung 2 gelangt. Zu diesem Zweck ist eine Drehdurchführungsdichtung 7 in Ringform vorgesehen, welche zwischen Kupplung 5 und Drehdurchführung 2 angeordnet ist. Vorzugsweise ist diese Drehdurchführungsdichtung 7 in eine Umfangsnut in der Drehdurchführung 2 eingelassen. Sie könnte jedoch auch in eine Umfangsnut in der Kupplung 5 eingelassen sein. Schließlich ist eine kombinierte Drehdurchführungs- und Betätigungskolbendichtung 8 im Grenzbereich Betätigungskolben 6 und Drehdurchführung 2 vorgesehen. Auch diese Drehdurchführungs- und Betätigungskolbendichtung 8 ist in eine Umfangsnut in der Drehdurchführung 2 eingelassen. Selbstverständlich könnte auch diese in eine Umfangsnut im Betätigungskolben 6 eingesetzt sein.

Der Vollständigkeit halber sei darauf hingewiesen, dass als Betätigungskolbendichtungen und/oder Drehdurchführungsdichtungen jegliche Art von Dichtungen in Betracht kommen, soweit sie hierfür geeignet sind. Insbesondere können ggf. auch einfache Spalt- oder Lippendichtungen zum Einsatz kommen.

Die Drehdurchführung 2 gemäß der Figur 1 ist als sogenannter "stehender Support" ausgeführt, d.h. diese Drehdurchführung 2 führt selbst keine Rotationsbewegung aus. Es versteht sich für den Fachmann von selbst, dass auch diese Drehdurchführung 2 selbst angetrieben sein kann. Die Erfindung setzt lediglich voraus, dass zwischen Betätigungskolben 6 und Drehdurchführung 2 eine Relativverdrehung stattfindet.

Im vorliegenden Ausführungsbeispiel ist die Drehdurchführung 2 als Hohlzylinder ausgeführt. Sie dient vorliegend zur Aufnahme einer Getriebeeingangswelle 3. Selbstverständlich könnte die Drehdurchführung 2 auch als Vollwelle ausgestaltet sein, oder sie könnte weitere Wellen aufnehmen, welche sich vorzugsweise koaxial durchsetzen, und welche beispielsweise eine gegebenenfalls schaltbare Verbindung zwischen einem Motor M und einem Getriebe G darstellen.

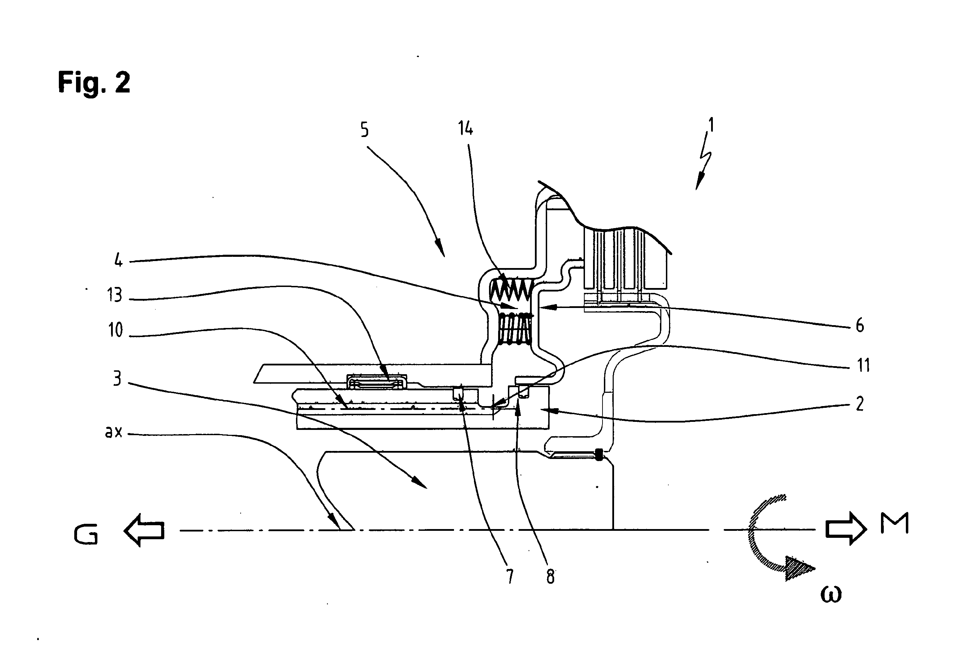

Die Figur 2 zeigt ein weiteres Ausführungsbeispiel einer erfindungsgemäßen Kupplungseinrichtung 1. Diese Kupplungseinrichtung 1 ist weitgehend identisch ausgebildet wie die Kupplungseinrichtung 1 gemäß der Figur 1. In identischer Weise vorliegende Bestandteile der Kupplungseinrichtung 1 sind daher mit gleichen Bezugszeichen versehen.

Die in der Figur 2 dargestellte Kupplungseinrichtung 1 unterscheidet sich von der gemäß der Figur 1 lediglich dadurch, dass kein Ringkolben 12 vorgesehen ist, an dem der Betätigungskolben 6 axial verschieblich geführt ist. An dessen Stelle ist ein Balg 14 vorgesehen, welcher eine um die Drehdurchführung 2 drehbar gelagerte Kupplungsnabe mit dem Betätigungskolben 6 an dessen Außenumfang verbindet. Drehdurchführung, Kupplungsnabe, Balg 14 und Betätigungskolben 6 schließen ähnlich wie beim Ausführungsbeispiel gemäß der Figur 2 einen Druckraum 4 ein. Der Balg 14 bildet daher eine für Hydraulikflüssigkeit undurchlässige Verbindung zwischen der Kupplungsnabe der Kupplung 5 und dem Betätigungskolben 6.

Erfindungsgemäß ist vorgesehen, dass dieser Balg 14 eine Federelastizität aufweist, welche rückstellend, den Druckraum 4 verkleinernd wirkt. Dieser Balg 14 übernimmt demzufolge die Funktion einer Rückstellfeder, die beispielsweise bei der in der EP 1 195 537 A1 beschriebenen Kupplungseinrichtung zusätzlich vorgesehen ist.

### Bezugszeichenliste

- 1: Kupplungseinrichtung
- 2: Drehdurchführung ("stehender Support")
- 3: Getriebeeingangswelle
- 4: Druckraum
- 5: Kupplung
- 6: Betätigungskolben
- 7: Drehdurchführungsdichtung
- 8: Drehdurchführungs- und Betätigungskolbendichtung
- 9: Betätigungskolbendichtung (Ringdichtung)
- 10: Hydraulikflüssigkeitskanal
- 11: Hydraulikflüssigkeitsaustrittsöffnung
- 12: Ringkolben
- 13: Radiallager

- ax: Drehachse
- M: Motor
- G: Getriebe
- ω: Drehrichtung

## Patentansprüche

1. Kupplungseinrichtung (1), insbesondere Doppelkupplungseinrichtung,
- mit wenigstens einer um eine Drehdurchführung (2) drehbar (ω) gelagerten Kupplung (5), welche
- einen axial (ax) verschieblich geführte, über einen Druckraum (4) hydraulisch betätigbaren Betätigungskolben (6) aufweist, wobei weinigstens eine den Druckraum (4) gegenüber seiner Umgebung abdichtende Betätigungskolbendichtung (8, 9) vorgesehen ist, wobei
- die Drehdurchführung (2) einen Hydraulikflüssigkeitskanal (10) aufweist, welcher über eine Hydraulikflüssigkeitsaustrittsöffnung (11) mit dem Druckraum (4) verbunden ist, wobei wenigstens eine die Hydraulikflüssigkeitsaustrittsöffnung (11) gegenüber ihrer Umgebung abdichtende Drehdurchführungsdichtung (7, 8) vorgesehen ist,
**dadurch gekennzeichnet, dass**
- der Betätigungskolben (6) auf der Drehdurchführung (2) axial (ax) verschieblich geführt ist und dass
- die wenigstens eine Drehdurchführungsdichtung (7, 8) zusätzlich wenigstens eine der Betätigungskolbendichtungen (8) darstellt.

2. Kupplungseinrichtung (1) nach Anspruch 1,
**dadurch gekennzeichnet, dass** genau eine einem jeweiligen Betätigungskolben (6) zugeordnete eine Betätigungskolbendichtung (8) darstellende Drehdurchführungsdichtung (8) vorgesehen ist, welche die Drehdurchführung (3) ringförmig umgreift.

3. Kupplungseinrichtung (1) nach einem der Ansprüche 1 oder 2,
**dadurch gekennzeichnet, dass** ein Ringzylinder (12) vorgesehen ist, an dem der Betätigungskolben (6) außenumfangsseitig axial (ax) verschieblich geführt ist und dass zwischen dem Betätigungskolben (6) und dem Ringzylinder (12) eine der Betätigungskolbendichtungen (9) vorgesehen ist, welche ringförmig ausgebildet ist und den Druckraum (4) gegen seine Umgebung abdichtet.

4. Kupplungseinrichtung nach einem der Ansprüche 1 oder 2,
**dadurch gekennzeichnet, dass** ein am Außenumfang des Betätigungskolbens (6) angeordneter Balg (14) vorgesehen ist, welcher den Druckraum (4) gegenüber seiner Umgebung abdichtet.

5. Kupplungseinrichtung nach Anspruch 4,
**dadurch gekennzeichnet, dass** der Balg (4) als Rückstellfeder (4) ausgebildet ist.

## Claims

1. Clutch device (1), in particular a double clutch device,
- with at least one clutch (5) which is mounted rotatably (ω) about a rotary leadthrough (2) which has
- an actuating piston (6) guided displaceably axially (ax) and actuable hydraulically via a pressure space (4), there being provided at least one actuating-piston seal (8, 9) sealing off the pressure space (4) with respect to its surroundings,
- the rotary leadthrough (2) having a hydraulic-fluid duct (10) which is connected to the pressure space (4) via a hydraulic-fluid outlet port (11), there being provided at least one rotary leadthrough seal (7, 8) sealing off the hydraulic-fluid outlet port (11) with respect to its surroundings,
**characterized in that**
- the actuating piston (6) is guided displaceably axially (ax) on the rotary leadthrough (2), and **in that**
- the at least one rotary leadthrough seal (7, 8) additionally forms at least one of the actuating-piston seals (8).

2. Clutch device (1) according to Claim 1, **characterized in that** exactly one rotary-leadthrough seal (8) is provided which is assigned to a respective actuating piston (6) and forms an actuating-piston seal (8) and which surrounds the rotary leadthrough (3) annularly.

3. Clutch device (1) according to either one of Claims 1 and 2, **characterized in that** an annular cylinder (12) is provided, on which the actuating piston (6) is guided displaceably axially (ax) on the outer circumference, and **in that** between the actuating piston (6) and the annular cylinder (12) is provided one of the actuating-piston seals (9) which is of annular design and which seals off the pressure space (4) with respect to its surroundings.

4. Clutch device according to either one of Claims 1 and 2, **characterized in that** a concertina (14) is provided, which is arranged on the outer circumference of the actuating piston (6) and which seals off the pressure space (4) with respect to its surroundings.

5. Clutch device according to Claim 4, **characterized in that** the concertina (4) is designed as a return spring (4).

## Revendications

1. Dispositif d'accouplement (1), en particulier dispositif d'accouplement double,
- avec au moins un accouplement (5) monté de façon rotative (ω) autour d'une traverse rotative (2),
- qui présente un piston de commande (6) à commande hydraulique au moyen d'une chambre de pression (4) guidé en coulissement axial (ax), dans lequel il est prévu au moins un joint d'étanchéité de piston de commande (8, 9) assurant l'étanchéité de la chambre de pression (4) par rapport à son environnement,
- dans lequel la traversée rotative (2) comporte un canal de liquide hydraulique (10), qui est raccordé à la chambre de pression (4) au moyen d'un orifice de sortie de liquide hydraulique (11), dans lequel il est prévu au moins un joint d'étanchéité de traversée rotative (7, 8) assurant l'étanchéité de l'orifice de sortie de liquide hydraulique (11) par rapport à son environnement,
**caractérisé en ce que**
- le piston de commande (6) est guidé en coulissement axial (ax) sur la traversée rotative (2), et **en ce que**
- l'au moins un joint d'étanchéité de traversée rotative (7, 8) représente en plus au moins un des joints d'étanchéité de piston de commande (8).

2. Dispositif d'accouplement (1) selon la revendication 1, **caractérisé en ce qu'**il est précisément prévu un joint d'étanchéité de traversée rotative (8) représentant un joint d'étanchéité de piston de commande (8) et associé à un piston de commande respectif (6), et qui entoure sous forme annulaire la traversée rotative (2).

3. Dispositif d'accouplement (1) selon l'une quelconque des revendications 1 ou 2, **caractérisé en ce qu'**il est prévu un cylindre annulaire (12), sur lequel le piston de commande (6) est guidé en coulissement axial (ax) sur son côté périphérique extérieur, et **en ce qu'**il est prévu entre le piston de commande (6) et le cylindre annulaire (12) un des joints d'étanchéité de piston de commande (9), qui est de forme annulaire et qui assure l'étanchéité de la chambre de pression (4) par rapport à son environnement.

4. Dispositif d'accouplement selon l'une quelconque des revendications 1 ou 2, **caractérisé en ce qu'**il est prévu un soufflet (14) disposé sur la périphérie extérieure du piston de commande (6), et qui assure l'étanchéité de la chambre de pression (4) par rapport à son environnement.

5. Dispositif d'accouplement selon la revendication 4, **caractérisé en ce que** le soufflet (4) est réalisé sous la forme d'un ressort de rappel (4).
